# EUROPÄISCHE PATENTSCHRIFT

(11) **EP 2 427 759 B1**
(45) Veröffentlichungstag und Bekanntmachung des Hinweises auf die Patenterteilung: **07.08.2013**
(21) Anmeldenummer: 10731483.3
(22) Anmeldetag: 04.05.2010
(51) Int. Cl.: G01N 29/34

(54) **VERFAHREN ZUR PRÜFUNG EINES HOHLKÖRPERS**
METHOD FOR TESTING A HOLLOW BODY
PROCÉDÉ POUR INSPECTER UN CORPS CREUX

(30) Priorität: 04.05.2009 AT 6782009
(43) Veröffentlichungstag der Anmeldung: 14.03.2012
(73) Patentinhaber: AVL Tippelmann GmbH, 74196 Neuenstadt (DE)
(72) Erfinder: STOERMER, Ulrich, 74196 Neuenstadt Am Kocher (DE)
(74) Vertreter: Babeluk, Michael
(86) Internationale Anmeldenummer: PCT/EP2010/055992
(87) Internationale Veröffentlichungsnummer: WO 2010/128022

(56) Entgegenhaltungen:
- WO-A1-96/13702
- DE-A1- 10 230 547
- US-A- 5 259 384
- US-A- 6 006 163
- US-A1- 2007 034 009
- US-B1- 6 751 560

## Beschreibung

Die Erfindung betrifft ein Verfahren zur Prüfung eines Hohlkörpers hinsichtlich geometrisch richtiger Ausführung von Hohlräumen, wobei zumindest eine Signalquelle an einer vorbestimmten Anlegeposition in Bezug auf den Hohlkörper positioniert wird, so dass das Signal in den Hohlraum eingeleitet wird, und wobei das Signal, nachdem es den Hohlraum passiert hat, an mindestens einer vorbestimmten Aufnahmeposition in Bezug auf den Hohlkörper aufgenommen und analysiert wird.

Die DE 102 30 547 B4 beschreibt ein Verfahren zur Prüfung eines Hohlkörpers der eingangs genannten Art, wobei das aufgenommene Schallsignal mit einem Referenzschallsignal verglichen wird. Die Bildung einer Übertragungsfunktion ist nicht vorgesehen, wodurch Aussagen über Unterschiede zwischen einem Prüfhohlkörper und einem Referenzhohlkörper qualitativ stark von der Reproduzierbarkeit des eingeleiteten Schallsignals abhängen.

Aus der US 6,439,053 B1 ist ein ähnliches Verfahren zur Prüfung eines Hohlkörpers bekannt, wobei für eine Vielzahl von Frequenzen ein akustisches Spektrum eines Prüfhohlkörpers erstellt und mit einem Referenzhohlkörper verglichen wird. Die Bildung von Übertragungsfunktionen ist auch hier nicht vorgesehen.

Aus der US 6,006,163 A ist ein System und Verfahren zur aktiven Schadensabfrage bei einer Struktur bekannt, wobei eine Reihe von piezoelektrischen Signalgebern und Signalsensoren (Transducer) an einer Struktur aufgebracht wird. Dabei wird aktiv die Struktur durch Breitband-Anregung der Transducer erkundet. Die Sensorsignale werden digitalisiert und es wird die Amplitude der Übertragungsfunktion und die Phasenverschiebung jedes Aktuator/Sensor-Paares ermittelt. Das System vergleicht die Größe der Übertragungsfunktion und das Phasenspektrum für jedes Aktuator/Sensor-Paar mit einer Referenz-Übertragungsfunktion dieses Aktuator/Sensor-Paares, welche für eine unbeschädigte Struktur berechnet wurde. Die Differenz zwischen der aktuellen Übertragungsfunktion und der Referenz-Übertragungsfunktion jedes Aktuator/Sensor-Paares wird mit statistischen Mitteln unter Einbeziehung der Standardabweichung im Zusammenhang mit der Referenzübertragungsfunktion ausgewertet.

Ein ähnliches Verfahren ist auch aus der US 2007/0034009 A1 bekannt.

Die US 5,259,384 A beschreibt eine Vorrichtung und ein nicht-invasives Verfahren zur Bestimmung der Knochendichte, der Knochenstärke und des Knochen-Bruchrisikos, wobei ein Ultraschallsignal in den Knochen eingeleitet wird und eine Fouriertransformation des Signales mit einer Fouriertransformation eines Referenzsignals einer Struktur mit bekannten akustischen Eigenschaften und Übertragungsweg verglichen und eine Knochen-Übertragungsfunktion gebildet wird.

Aus der WO 96/13702 A1 ist ein System zur Echtzeitmessung des Impedanzspektrums oder der Übertragungsfunktion von akustischen und mechanischen Systemen bekannt, wobei ein Echtzeitvergleich zwischen der Übertragungsfunktion eines betrachteten akustischen oder mechanischen Systems mit der Übertragungsfunktion eines Referenzsystems durchgeführt wird.

Weiters offenbart die US 6,751,560 B1 ein nicht-invasives Rohrleitungs-Prüfsystem, wobei über einen Aktuator eine Eingangswellenform in den Prüfteil eingeleitet und ein reflektiertes Signal gemessen wird. Aus einem Vergleich des Eingangssignals mit der reflektierten Komponente wird auf den Zustand des Prüfteiles geschlossen.

Aufgabe der Erfindung ist es, ein qualitativ hochwertiges Verfahren zur Prüfung von Hohlkörpern zu entwickeln, welches innerhalb einer gegebenen Schwankungsbreite reproduzierbare Analyseergebnisse bietet.

Erfindungsgemäß wird dies dadurch erreicht, dass zumindest bei einem Referenzhohlkörper und bei zumindest einem Prüfhohlkörper jeweils zumindest eine Übertragungsfunktion für zumindest einen Übertragungsweg, vorzugsweise zwischen dem eingeleiteten Schallsignal und dem aufgenommenen Schallsignal, ermittelt wird, dass zumindest eine entsprechende Übertragungsfunktion für zumindest einen gleichen Übertragungsweg des Prüfhohlkörpers mit der Übertragungsfunktion des Referenzhohlkörpers verglichen wird und dass ein fehlerhafter Prüfhohlkörper festgestellt wird, wenn die Abweichung der Übertragungsfunktion des Prüfhohlkörpers von der Übertragungsfunktion des Referenzhohlkörpers eine definierte zulässige Abweichung überschreitet, und dass die Auswahl zumindest eines Übertragungsweges durch Prüfen zumindest eines, bekannte Fehler aufweisenden Fehler-Referenzhohlkörpers erfolgt. Die zulässige Abweichung kann dabei an Hand der Abweichungen unter Übertragungsfunktionen festgelegt werden, die bei gleichartigen Messungen an denselben Übertragungswegen verschiedener Referenzhohlkörper ermittelt wurden.

Die Prüfung wird mit Schallsignalen durchgeführt, wobei die Frequenz der verwendeten Schallsignale auf die Größe des zu untersuchenden Hohlraumes abzustimmen ist. Die Analyse basiert auf dem Vergleich von frequenzabhängigen Übertragungsfunktionen von Signalen, die an Referenz- und Prüfhohlkörpern aufgenommen wurden. Als Referenzhohlkörper werden hier solche Hohlkörper bezeichnet, deren Hohlraum bestimmten Vorgaben entspricht. Das kann einerseits bedeuten, dass der Hohlraum die ursprünglich beabsichtigte Gestalt aufweist. Für weiterführende Anwendungen kann ein Referenzhohlkörper jedoch auch eine definierte Abweichung von der ursprünglich beabsichtigen Gestalt repräsentieren, z.B. einen typischen Produktionsfehler, nach dem gezielt gesucht werden soll. Ein solcher Hohlkörper wird im Weiteren als Fehler-Referenzhohlkörper bezeichnet. Ein Prüfhohlkörper ist dagegen ein Hohlkörper, von dem nicht bekannt ist, ob der zu untersuchende Hohlraum die beabsichtigte Gestalt hat.

Mit der frequenzabhängigen Übertragungsfunktion, werden die durch die Übertragung verursachten Veränderungen des Signals hinsichtlich Amplitude und Phasenlage erfasst (Amplituden- und Phasenfrequenzgang). Die Übertragungsfunktion wird nach der Transformation der Signale in den Frequenzbereich berechnet und lässt sich sehr gut auf breitbandige Signale anwenden, die nicht nur einzelne Frequenzen sondern ein wählbares Frequenzintervall erfassen. Somit kommen bei der Untersuchung vorzugsweise breitbandige Signale zur Anwendung.

Sofern der zu untersuchende Hohlkörper mehrere Zugänge zum Hohlraum aufweist oder falls Zugänge geschaffen werden können, die zur Schalleinleitung oder Schallaufnahme geeignet sind, stellt jede Kombination einer Schallanlege- und einer Schallaufnahmeposition einen möglichen Übertragungsweg dar, dessen Übertragungsfunktion in der beschriebenen Art und Weise bestimmt werden kann. Schallanlege- und Schallaufnahmeposition können auch identisch sein.

Um Zufallseinflüsse möglichst auszuschalten, kann vorgesehen sein, dass die Messung für jeden Übertragungsweg zumindest einmal wiederholt wird. Die in mehreren Messungen ermittelten Verläufe, Spektren oder von diesen abgeleitete Größen können z.B. durch Bestimmung der Mittelwerte oder des Medians zusammengefasst werden. Ebenso kann die einem bestimmten Kriterium (z.B. Kohärenz der Signale) entsprechend beste Messung verwendet werden.

Indem möglichst viele Übertragungswege in Betracht gezogen und schließlich diejenigen in die Analyse einbezogen werden, deren durch die jeweilige frequenzabhängige Übertragungsfunktion beschriebenes Übertragungsverhalten besonders empfindlich auf Abweichungen der Geometrie des Hohlraumes reagiert, kann die Erkennungsrate des Verfahrens gesteigert werden.

Unter den Übertragungswegen, deren Übertragungsverhalten besonders empfindlich auf Abweichungen der Geometrie des Hohlraumes reagiert, sind wiederum diejenigen von besonderem Interesse, mit denen sich solche Änderungen der Geometrie detektieren lassen, die eine Beeinträchtigung der Funktionstüchtigkeit des zu untersuchenden Hohlkörpers bedeuten. Derartige Übertragungswege können unter Verwendung von Fehler-Referenzhohlkörpern gefunden werden. Wenn die Analyse auf derartige Übertragungswege beschränkt werden kann, lässt sich die Fehlerkennungsrate senken. (Erkennung als Schlechtteil, obwohl die vorhandenen geometrischen Abweichungen des Hohlraumes keine Beeinträchtigung der Funktionstüchtigkeit mit sich bringen)

Nur von theoretischen Überlegungen ausgehend ist es schwierig, eine Toleranzgrenze (zulässige Schwankungsbreite) festzulegen, ab der Abweichungen der Übertragungsfunktionen eines Prüfhohlkörpers von den entsprechenden Übertragungsfunktionen eines Referenzhohlkörpers als Fehler interpretiert werden müssen. Um die Aussagekraft weiter zu erhöhen, ist es besonders vorteilhaft, wenn die zulässige Abweichung auf Basis der Übertragungsfunktionen einer Anzahl von Referenzhohlkörpern ermittelt wird. Die dafür verwendeten Referenzhohlkörper (Referenzgruppe) müssen in ihrer Gesamtheit die zulässigen geometrischen Abweichungen des Hohlraumes repräsentieren. In diesem Fall kann die Schwankungsbreite der an den Übertragungswegen dieser Teile gewonnenen Übertragungsfunktionen als zulässige Schwankungsbreite angesehen werden.

Sofern kein Referenzhohlkörper existiert, dessen Hohlraum exakt der beabsichtigen Gestalt entspricht, wird stattdessen das Mittel der an den jeweiligen Übertragungswegen der Referenzhohlkörper ermittelten Übertragungsfunktionen verwendet.

Abhängig von der Komplexität des zu untersuchenden Hohlraumes werden in der Regel nicht genügend Referenzhohlkörper bereitstehen, um die zulässigen geometrischen Abweichungen des Hohlraumes in allen möglichen Kombinationen darzustellen. Deswegen kann es vorteilhaft sein, die Bewertung auf die Streuung der Übertragungsfunktionen der Referenzgruppe statt auf die Schwankungsbreite zu beziehen. Das ermöglicht eine statistische Bewertung, die als Ergebnis die Wahrscheinlichkeit ausweist, mit der
- der einer bestimmten Frequenz zugeordnete Wert einer spektralen Größe (vorzugsweise der Übertragungsfunktion),
- ein Übertragungsweg (gesamte Übertragungsfunktion im betrachteten Frequenzintervall) oder
- der Prüfhohlkörper selbst (Gesamtheit aller Übertragungswege)
zur Referenzgruppe gehört (bzw. zu einer Gruppe entsprechender Werte, die aus Messungen an der Referenzgruppe gewonnen wurden). Damit liefert das Verfahren die Wahrscheinlichkeit mit der der Hohlraum eines untersuchten Prüfhohlkörpers korrekt ausgeführt ist (Gutwahrscheinlichkeit).

Gutwahrscheinlichkeiten für Übertragungswege können ausgehend von den aus der Verteilung der Werte der Übertragungsfunktionen der Referenzgruppe folgenden statistischen Kennwerte auf verschiedenen Wegen berechnet werden. Die geringste unter den Gutwahrscheinlichkeiten der Übertragungswege eines Prüfhohlkörpers kann als Gutwahrscheinlichkeit dieses Prüfhohlkörpers angesehen werden. Die Zusammenfassung der Einzelergebnisse nach anderen Methoden ist damit nicht ausgeschlossen.

Die Verteilung der Werte der Übertragungsfunktionen der Referenzgruppe stellt somit die Basis für die Bewertung der Prüfhohlkörper dar. Bei der Durchführung dieser Bewertung kann es vorteilhaft sein, die Streuung (bzw. die Schwankungsbreite) mit einem gegebenenfalls frequenzabhängigen Korrekturfaktor zu versehen, um Fehlerkennungen zu vermeiden, die daraus resultieren können, dass die Referenzgruppe nicht die volle zulässige Schwankungsbreite der Geometrie des Hohlraumes abbildet.

Prinzipiell kann analog zur Ermittlung der Gutwahrscheinlichkeit auch die Wahrscheinlichkeit für die Zugehörigkeit eines Prüfhohlkörpers zu einer Gruppe gleichartiger Fehler-Referenzhohlkörper bestimmt werden. Für die Gruppe der Fehler-Referenzhohlkörper gelten dann die gleichen Anforderungen wie für eine Referenzgruppe aus Gutteilen.

Wenn jeweils nur wenige Fehler-Referenzhohlkörper verfügbar sind, ist ein anderes Vorgehen vorteilhaft. Durch Vergleich der Übertragungsfunktionen der Referenzgruppe mit denjenigen von gleichartigen Fehler-Referenzhohlkörpern können die für eine bestimmte Fehlerart typischen Abweichungen gefunden werden. Diese erstrecken sich im Allgemeinen nicht über das gesamte betrachtete Frequenzintervall sondern auf Teilintervalle, die bei Vorgabe eines Schwellwertes automatisiert gefunden werden können. Mit dem Schwellwert ist dabei festzulegen, wie weit die Werte der betrachteten spektralen Größe an den Fehler-Referenzhohlkörpern bezogen auf die Streuung bzw. zulässige Schwankungsbreite mindestens von der Referenz abweichen sollen, damit der zugehörige Frequenzbereich als signifikant angesehen wird.

Durch entsprechende Wichtung bzw. Ausblenden der nicht signifikanten Frequenzintervalle (Filterung) können die für die Erkennung einer bestimmten Fehlerart wesentlichen Anteile der Übertragungsfunktionen gezielt für die Bewertung benutzt werden. Die Gesamtbreite der verbleibenden Frequenzintervalle (bzw. der Frequenzintervalle, deren Wichtung einen bestimmten Wert übersteigt) zeigt dabei an, wie aussagekräftig der zugehörige Übertragungsweg für die Erkennung einer gegebenen Fehlerart ist.

Unter Verwendung derartiger Filter kann das Verfahren auf bestimmte Fehlerarten trainiert werden. Wenn man bei Verwendung eines bestimmten Filters eine geringe Gutwahrscheinlichkeit erhält, deutet dies auf die dem Filter zugeordnete Fehlerart. Ergebnisse einer einzigen Messung können dadurch sehr schnell nach verschiedenen Kriterien bewertet werden, um spezifische Fehler zu finden.

Um eventuelle Änderungen in den Umgebungsbedingungen zu berücksichtigen, ist es vorteilhaft, wenn unterschiedliche oder wechselnde Umgebungsbedingungen durch zumindest einen Korrekturterm oder -faktor in der Übertragungsfunktion berücksichtigt werden.

Um auszuschließen, dass defekte Komponenten, wie Mikrofone und/oder Lautsprecher falsche Ergebnisse verursachen, können vor der Durchführung der Prüfung zumindest die signalaufnehmenden und/oder signalabgebenden Komponenten einem Selbsttest unterzogen werden.

Die Erfindung wird im Folgenden anhand der Figuren näher erläutert. Es zeigen:
- Fig. 1: eine Schnittdarstellung eines Hohlkörpers 1 mit einer SchallanlegePosition und vier Schallabstrahlpositionen;
- Fig. 2: ein Beispiel einer Übertragungsfunktion, aufgetragen über der Frequenz, für Referenz- und fehlerhafte Prüfhohlkörper;
- Fig. 3: die absolute Abweichung der Übertragungsfunktionen von fehlerbehafteten Prüfhohlkörpern und Referenzhohlkörpern von der gemittelten Übertragungsfunktion der Referenzhohlkörper;
- Fig. 4: ein Beispiel einer Übertragungsfunktion für einen Übertragungsweg ohne Kompensation von Umwelteinflüssen; und
- Fig. 5: diese Übertragungsfunktion mit Kompensation von Umwelteinflüssen.

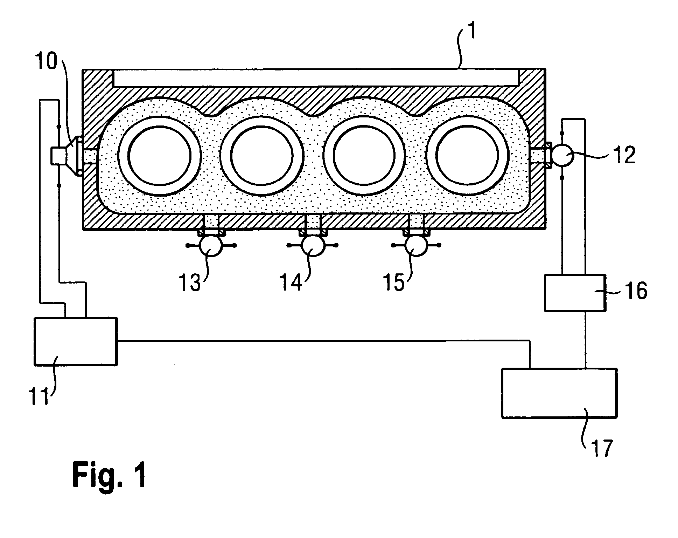

Fig. 1 zeigt in einer Schnittdarstellung beispielhaft einen Hohlkörper 1, bei dem es sich um den Zylinderblock einer vierzylindrigen wassergekühlten Brennkraftmaschine handelt. An einer Stirnseite des Hohlkörpers 1 ist an einer exakt definierten Stelle in Bezug auf den Hohlkörper 1, nämlich an der Schallanlegeposition, ein Lautsprecher 10 angeordnet, der als Schallquelle dient und im Zusammenwirken mit einem Signalgenerator ein Schallsignal erzeugt. Der Lautsprecher 10 ist unter Verwendung von Schallisolationsmaterial so an der Schallanlegeposition angeordnet, dass jedenfalls der überwiegende Teil der Schallenergie in den Hohlkörper eingeleitet wird und gleichzeitig Störungen durch Umgebungsgeräusche minimiert werden.

Wie ebenfalls in Fig. 1 dargestellt, ist an der der Schallanlegeposition gegenüberliegenden Seite des Hohlkörpers 1 ein Mikrofon 12 an einer ebenfalls fest vorgegebenen Stelle in Bezug auf den Hohlkörper 1 angeordnet, nämlich der Schallaufnahmeposition. Weitere Mikrofone 13, 14 und 15 können an weiteren Schallaufnahmepositionen angeordnet sein. Die Schallanlegeposition und die Schallaufnahmeposition sind vorzugsweise in der Nähe von Durchtritten der Hohlräume des Hohlkörpers 1 angeordnet. Die Mikrofone 12, 13, 14 und 15 sind unter Verwendung von Schallisolationsmaterial so an den Schallaufnahmepositionen angeordnet, dass jedenfalls der überwiegende Teil der Schallenergie, die im Bereich der jeweiligen Schallabstrahlposition von bzw. aus dem Hohlkörper ausgestrahlt wird, von innen aufgenommen wird und gleichzeitig Störungen durch Umgebungsgeräusche minimiert werden.

Es versteht sich, dass entweder gleichzeitig die Signale aller vier Mikrofone 12, 13, 14 und 15 aufgenommen werden können oder aufeinanderfolgend lediglich ein Mikrofon an den entsprechenden unterschiedlichen Stellen angeordnet werden und die jeweiligen Messungen zeitlich aufeinanderfolgend durchgeführt werden können. Ebenso können mehrere Schallanlegepositionen existieren. Die Messungen werden dann in der beschriebenen Art und Weise nacheinander für jede Schallanlegeposition durchgeführt, wobei jeweils nur an einer Schallanlegeposition ein Schallsignal abgegeben wird. Bei geeigneter Wahl der Signale kann die Messung auch so erfolgen, dass an verschiedenen Schallanlegepositionen gleichzeitig Schallsignale abgegeben werden.

Falls der Hohlraum Öffnungen aufweist, die bei einer Messung weder als Schallanlege- noch als Schallaufnahmeposition verwendet werden, ist es vorteilhaft, diese unter Verwendung von Schallisolationsmaterial so zu verschließen, dass die Messung nicht durch Umgebungsgeräusche beeinflusst werden kann. Ebenso ist es vorteilhaft, den Prüfhohlkörper oder das Gestell, in dem er während der Messung gelagert wird, so aufzustellen, dass Körperschalleintrag zumindest im interessierenden Frequenzbereich unterbunden wird.

Die Mikrofone 12, 13, 14 und 15 wandeln die aufgenommenen Schallsignale in elektrische Signale um und leiten diese ggf. über einen zwischengeschalteten Verstärker 11 einem Analysator 16 einer elektronischen Datenverarbeitungsanlage 17 zu. Die Datenveranlagungsanlage 17 stellt, gegebenenfalls gemeinsam mit dem Analysator 16, der in die Datenverarbeitungsanlage integriert sein kann eine Analyseeinrichtung dar.

Der Signalgenerator erzeugt Signale, welche über Verstärker 11 an die Lautsprecher 10 weitergeleitet werden. Der Signalgenerator kann in die Datenverarbeitungsanlage 17 integriert sein.

Während einer Messzeit von beispielsweise 0,4 Sekunden wird die Frequenz des Signals beispielsweise von 1.500 Hz auf 12.500 Hz angehoben. Abhängig vom Zeitverlauf des Signals (Rampen zum Auf- und Abklingen o.Ä.) verkleinert sich das für die Auswertung verwendbare Frequenzintervall beispielsweise auf den Bereich zwischen 2.000 Hz und 12.000 Hz. Über die Mikrofone 12, 13, 14 und 15 wird der Schalldruck empfangen und während der Messzeit aufgezeichnet. Im dargestellten Beispiel wird aus den Spektren der aufgenommenen und eingeleiteten Schallsignale die frequenzabhängige Übertragungsfunktion H(f) gebildet.

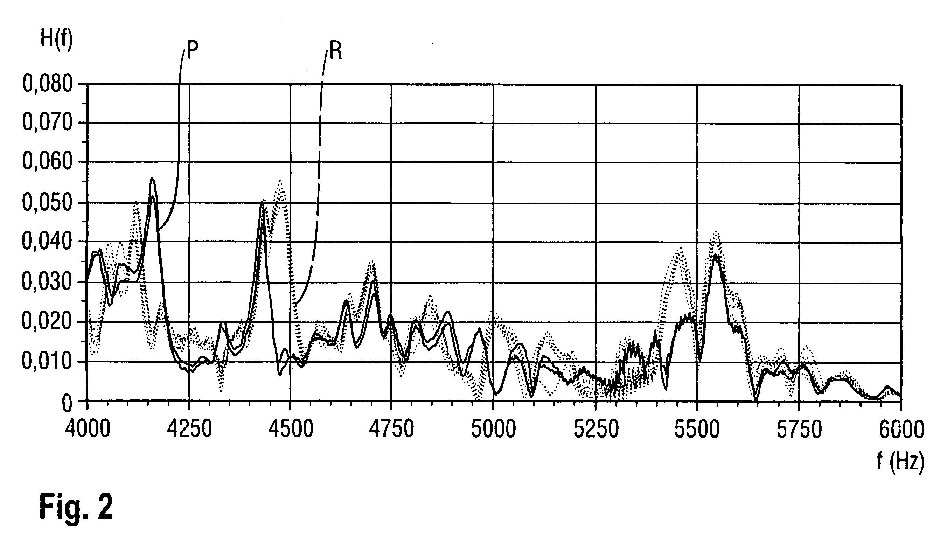

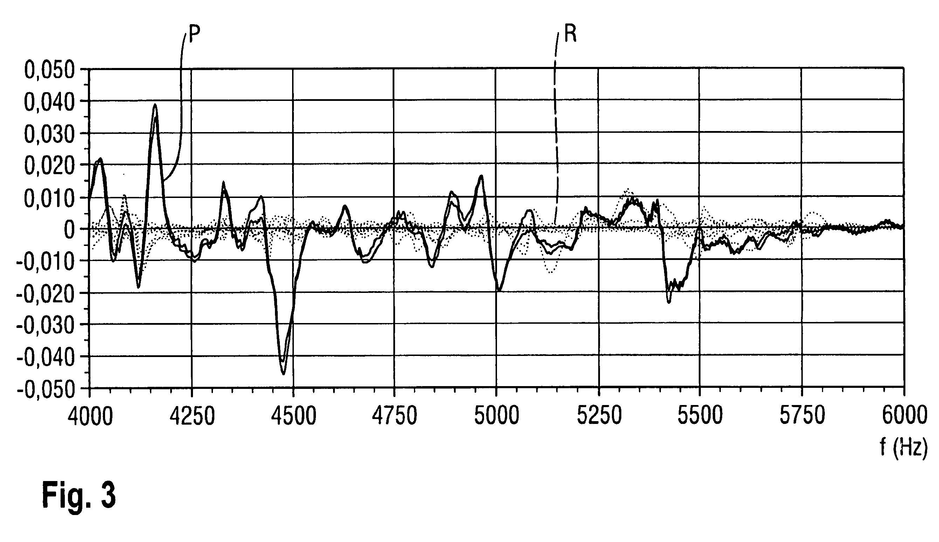

In Fig. 2 sind die Übertragungsfunktionen H(f) für die Referenzhohlkörper R und für zwei gleichartige fehlerhafte Prüfhohlkörper P dargestellt. Weiters sind in Fig. 3 die absoluten Abweichungen der Übertragungsfunktionen H(f) der Referenzhohlkörper R und der fehlerhaften Prüfhohlkörper P von der gemittelten Übertragungsfunktion der Referenzhohlkörper aufgezeichnet. Deutlich sind Abweichungsspitzen der Übertragungsfunktionen der fehlerhaften Prüfhohlkörper im Bereich der Frequenzen 4150 Hz, 4500 Hz und 5450 Hz zu erkennen.

Die Verwendung von frequenzabhängigen Übertragungsfunktionen H(f) bietet eine hohe Genauigkeit und gute Reproduzierbarkeit bei den Messungen und Analysen, insbesondere dann, wenn die Messungen für jeden Prüfhohlkörper P wiederholt durchgeführt werden. Somit sind Zufallseinflüsse weitgehend ausgeschlossen, wodurch ein hohes Qualitätssicherungsniveau erreicht werden kann.

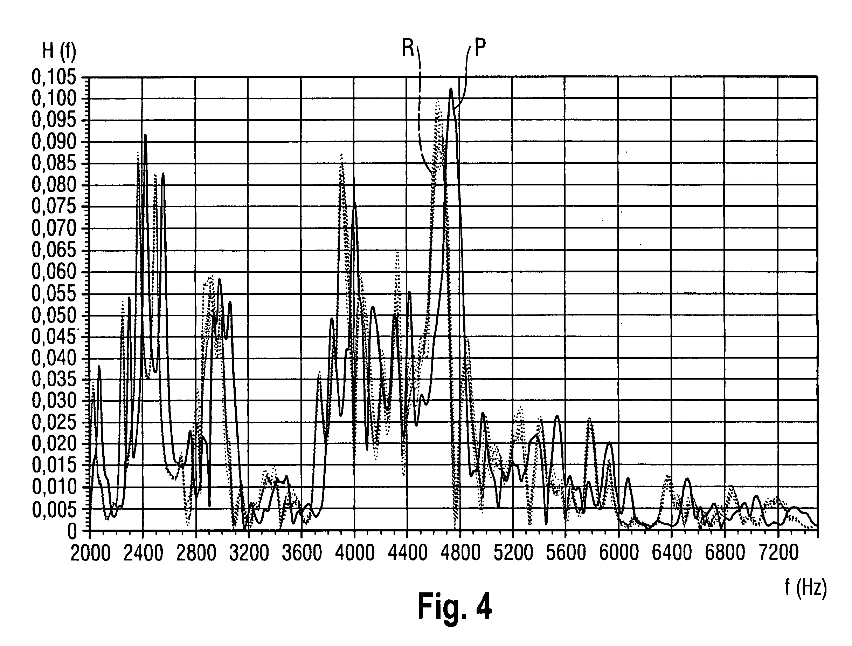

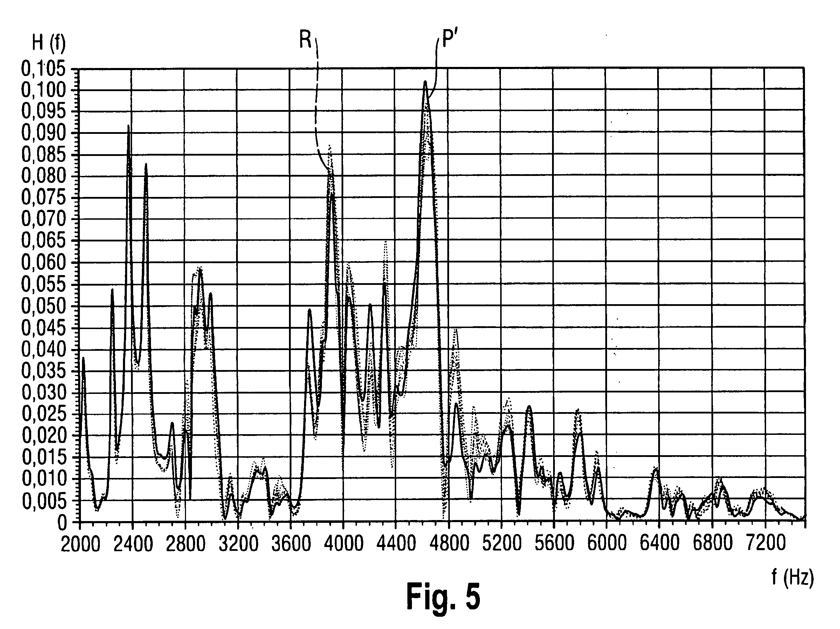

In der Praxis hat sich gezeigt, dass die Umgebungsbedingungen (insbesondere die Temperatur) die Messergebnisse beeinflussen können. Dies äußert sich in einer Streckung oder Stauchung der Übertragungsfunktion H über der Frequenz f, was dazu führen kann, dass fehlerlose Teile fälschlicherweise als schlecht erkannt werden. Fig. 4 zeigt ein Beispiel einer Übertragungsfunktion H(f) für einen Übertragungsweg ohne Kompensation von Umwelteinflüssen, wobei deutlich eine Streckung über der Frequenz f des nicht bei Normbedingungen gemessenen Prüfhohlkörpers P gegenüber dem unter Normbedingungen gemessenen Referenzhohlkörper R erkennbar ist. Eine Berücksichtigung von wechselnden Umgebungsbedingungen kann am einfachsten durch zumindest einen Korrekturterm oder Korrekturfaktor in der Übertragungsfunktion erfolgen. Dieser Korrekturfaktor oder -term kann beispielsweise numerisch bestimmt werden. Fig. 5 zeigt solche rechnerische Kompensation der von Normbedingungen abweichenden Umgebungseinflüsse der Messergebnisse des Prüfhohlkörpers. Die kompensierte Übertragungsfunktion ist mit P' bezeichnet.

Weiters können fehlerhafte Mikrofone und/oder Lautsprecher die Messergebnis stark beeinflussen. Um dies möglichst auszuschließen, können vor der Durchführung der Prüfung die signalaufnehmenden und/oder signalabgebenden Komponenten einem Selbsttest unterzogen werden. Im Rahmen des Selbsttests kann beispielsweise vorgesehen sein, dass alle Mikrofone nacheinander jeweils wiederholt das Signal eines Lautsprechers aufnehmen. Dieser Selbsttest erfolgt ohne zu prüfendem Hohlkörper 1. Aus der Kohärenz kann auf defekte Mikrofone/Lautsprecher geschlossen werden. Die Kohärenz wird auch bei normalen Messungen überwacht und dient dort als Kriterium für eine gültige Messung, etwa um Störungen durch Umgebungslärm zu detektieren.

## Patentansprüche

1. Verfahren zur Prüfung eines Hohlkörpers (1) hinsichtlich geometrisch richtiger Ausführung von Hohlräumen, wobei zumindest eine Signalquelle an einer vorbestimmten Anlegeposition in Bezug auf den Hohlkörper (1) positioniert wird, so dass das Signal in den Hohlraum eingeleitet wird, und wobei das Signal, nachdem es den Hohlraum passiert hat, an mindestens einer vorbestimmten Aufnahmeposition in Bezug auf den Hohlkörper aufgenommen und analysiert wird, wobei zumindest bei einem fehlerpeien Referenzhohlkörper (R) und bei zumindest einem Prüfhohlkörper (P) jeweils zumindest eine Übertragungsfunktion (H) für zumindest einen Übertragungsweg, vorzugsweise zwischen dem eingeleiteten Signal und dem aufgenommenen Signal ermittelt wird, dass zumindest eine entsprechende Übertragungsfunktion (H) für zumindest einen gleichen Übertragungsweg des Prüfhohlkörpers (P) mit der Übertragungsfunktion (H) des fehlerfreien Referenzhohlkörpers (R) verglichen wird und dass ein fehlerhafter Prüfhohlkörper (P) festgestellt wird, wenn die Abweichung der Übertragungsfunktion (H) des Prüfhohlkörpers (P) von der Übertragungsfunktion (H) des fehlerfreien Referenzhohlkörpers (R) eine definierte zulässige Abweichung überschreitet, **dadurch gekennzeichnet, dass** die Auswahl zumindest eines Übertragungsweges durch Prüfen zumindest eines, bekannte Fehler aufweisenden Fehler-Referenzhohlkörpers (R) erfolgt.

2. Verfahren nach Anspruch 1 , **dadurch gekennzeichnet, dass** die definierte zulässige Abweichung auf Basis der Übertragungsfunktionen (H) einer Anzahl von fehlerlosen Referenzhohlkörpern (R) ermittelt wird.

3. Verfahren nach Anspruch 1 oder 2, **dadurch gekennzeichnet, dass** die Messung für jeden Übertragungsweg zumindest einmal wiederholt wird.

4. Verfahren nach einem der Ansprüche 1 bis 3, **dadurch gekennzeichnet, dass** für die Prüfung ein Mittelwert von Übertragungsfunktionen (H) gleicher Übertragungswege mehrerer Referenzhohlkörper (R) verwendet wird.

5. Verfahren nach einem der Ansprüche 1 bis 4, **dadurch gekennzeichnet, dass** durch Vergleichen der Übertragungsfunktionen (H) von fehlerlosen Referenzhohlkörpern (R) mit Übertragungsfunktionen von, bekannte Fehler aufweisenden, Fehler-Referenzhohlkörpern für die Prüfung relevante Teilintervalle des Frequenzspektrums ermittelt werden, und dass die Prüfung der Prüfhohlkörper (P), vorzugsweise automatisiert, zumindest überwiegend in den ermittelten Teilintervallen des Frequenzspektrums durchgeführt wird.

6. Verfahren nach einem der Ansprüche 1 bis 5, **dadurch gekennzeichnet, dass** unterschiedliche oder wechselnde Umgebungsbedingungen durch zumindest einen Korrekturterm oder -faktor in der Übertragungsfunktion H berücksichtigt werden.

7. Verfahren nach einem der Ansprüche 1 bis 6, **dadurch gekennzeichnet, dass** vor der Durchführung der Prüfung die signalaufnehmenden und/oder signalabgebenden Komponenten einem Selbsttest unterzogen werden.

## Claims

1. A method for testing a hollow body (1) concerning geometrically correct implementation of hollow spaces, wherein at least one signal source is positioned at a predetermined line-up position with respect to the hollow body (1), so that the signal will be introduced into the hollow space, and wherein the signal, once it has passed the hollow space, will be received and analyzed at least at one predetermined recording position with respect to the hollow body, wherein at least one transmission function (H) for at least one transmission path is determined at least in an errorless hollow reference body (R) and in at least one hollow test body (P), preferably between the introduced signal and the recorded signal, that at least one respective transmission function (H) for at least one similar transmission path of the hollow test body (P) is compared with the transmission function (H) of the errorless hollow reference body (R), and that an errorless hollow test body (P) is determined when the deviation of the transmission function (H) of the hollow test body (P) from the transmission function (H) of the errorless hollow reference body (R) exceeds a defined permissible deviation, **characterised in that** the selection of at least one transmission path occurs by testing at least one hollow error reference body (R) having known errors.

2. A method according to claim 1, **characterised in that** the defined permissible deviation is determined on the basis of the transmission function (H) of a number of errorless reference hollow bodies (R).

3. A method according to claim 1 or 2, **characterised in that** the measurement for each transmission path is repeated at least once.

4. A method according to one of the claims 1 to 3, **characterised in that** a mean value of transmission functions (H) of similar transmission paths of several hollow reference bodies (R) is used for the test.

5. A method according to one of the claims 1 to 4, **characterised in that** partial intervals of the frequency spectrum which are relevant for the test are determined by comparing the transmission functions (H) of errorless hollow reference bodies (R) with transmission functions of hollow error reference bodies having known errors, and that the test of the hollow test body (P) is performed at least predominantly in the determined partial intervals of the frequency spectrum, preferably in an automated manner.

6. A method according to one of the claims 1 to 5, **characterised in that** different or variable ambient conditions are taken into account by at least one corrective term or factor in the transmission function H.

7. A method according to one of the claims 1 to 6, **characterised in that** the signal-recording and/or signal-emitting components are subjected to a self-test prior to performing the test.

## Revendications

1. Procédé de contrôle d'un corps creux (1) permettant de vérifier l'exactitude géométrique de la réalisation de chambres creuses, selon lequel au moins une source de signal est montée dans une position prédéfinie par rapport au corps creux (1) de sorte que le signal soit transmis dans la chambre creuse, et, le signal, après être passé dans la chambre creuse est reçu et analysé dans au moins une position de réception prédéfinie par rapport au corps creux, pour au moins un corps creux de référence (R) exempt de défaut et pour au moins un corps creux à contrôler (P), respectivement, au moins une fonction de transmission (H) étant détectée pour au moins une voie de transmission, de préférence entre le signal transmis et le signal reçu, au moins une fonction de transmission (H) correspondante pour au moins une même voie de transmission du corps creux à contrôler (P) étant comparée avec la fonction de transmission (H) du corps creux de référence exempt de défaut (R), et un corps creux (P) à contrôler défectueux étant constaté lorsque l'écart entre la fonction de transmission (H) du corps creux (P) à contrôler et la fonction de transmission (H) du corps creux de référence (R) exempt de défaut dépasse un écart admissible défini,
**caractérisé en ce que**
le choix d'au moins une voie de transmission est effectué en contrôlant au moins un corps creux de référence défectueux (R) présentant un défaut connu.

2. Procédé conforme à la revendication 1,
**caractérisé en ce que**
l'écart admissible défini est déterminé à partir des fonctions de transmission (H) d'une série de corps creux de référence (R) exempts de défaut.

3. Procédé conforme à la revendication 1 ou 2,
**caractérisé en ce que**
la mesure est recommencée au moins une fois pour chaque voie de transmission.

4. Procédé conforme à l'une des revendications 1 à 3,
**caractérisé en ce que**
pour le contrôle on utilise une valeur moyenne de fonctions de transmission (H) de la même voie de transmission de plusieurs corps creux de référence (R).

5. Procédé conforme à l'une des revendications 1 à 4,
**caractérisé en ce que**
par la comparaison des fonctions de transmission (H) de corps creux de référence (R) exempts de défauts avec des fonctions de transmission de corps creux de référence défectueux présentant des défauts connus, on détermine pour le contrôle des intervalles partiels pertinents du spectre de fréquences et le contrôle du corps creux à contrôler (P) est effectué de préférence de façon automatisée au moins principalement dans les intervalles partiels déterminés du spectre de fréquences.

6. Procédé conforme à l'une des revendications 1 à 5,
**caractérisé en ce que**
des conditions d'environnement différentes ou variables sont prises en considération dans la fonction de transmission (H) par au moins un terme ou facteur de correction.

7. Procédé conforme à l'une des revendications 1 à 6,
**caractérisé en ce qu'**
avant la mise en oeuvre du contrôle, les composants de réception et/ou d'émission des signaux sont soumis à un autotest.
